# EUROPEAN PATENT APPLICATION

(11) **EP 1 902 986 A1**
(43) Date of publication of application: **26.03.2008**
(21) Application number: 06425645.6
(22) Date of filing: 20.09.2006
(51) Int. Cl.: B65G 69/00, B60R 19/16

(54) **Device for impact damping**

(71) Applicant: Bawer S.r.l., 75100 Matera (IT)
(72) Inventor: Lorusso, Pasquale, 70022 Altamura (IT); Lorusso, Giuseppe, 70022 Altamura (IT)
(74) Representative: Lieke, Winfried

(57) **Abstract**

The present invention is related to a device or damping impacts between two relatively movable, in particular bulky objects, having
a support (10), which may be fixed on one of said objects with a mounting side (18) facing said object, and
a damping element (1) being substantially cylindrical and supported within the support (10) and comprising an elastomeric material,
in order to provide such a device for damping impacts and having the above-mentioned features, which is more effectively damping impacts between relatively movable objects and with only little wear, the device is characterized in that the support (10) comprises a part cylindrical receiving surface (19) adapted to the outer surface of the damping element (1), wherein said receiving surface is facing away from the mounting surface (18) and partly encompasses the cylindrical mantle face (20) of the damping element (1) at a narrow distance, such that at least a portion of the outer surface (20) projects from said support (10), wherein any impacts acting on the projecting portion of the damping element (1) are transferred across the damping element (1) onto the partly cylindrical receiving surface.

## Description

The present invention is related to a device for damping or buffering impacts between relatively movable objects, in particular bulky objects, said device comprising a support means to be fixed on at least one of said objects, said support means having a mounting side facing the object to which it is fixed and a substantially cylindrical damping element rotatably received on said support opposite of the mounting side, said damping element comprising an elastomeric material.

Corresponding devices are for instance known from EP-A-0 648 644 or FR 1 038 120. Typically, the damping element is a wheel or roller, the surface of which comprises an elastomeric material, wherein the wheel or roller is rotatably supported via a shaft and a corresponding bearing on said support such that, once a corresponding damping device is mounted to an object, which is approaching another object, the upper surface of the wheel or roller contacts the other object, wherein the resiliency of the elastomeric material of the upper surface of said wheel or roller buffers or damps a corresponding impact occurring when the objects are moved closer together. The force acting on the device is thereby transferred from the upper surface of said elastomeric roller via central shaft onto the bearings for said shaft, which in turn are fixed on said support, and said support in turn directly transfers these forces onto the object to which the support and thus the whole damping device is fixed.

Further, as it is shown in FR 1 038 120, the support may compris a rotatably supported wheel on a bracket, said bracket being telescopically received in a properly fitting support under the bias of a spring so that said bracket together with said wheel may somewhat yield into the support upon a corresponding impact.

However, such devices are only suited for relatively small loads. Moreover, it may well happen that, if forces are acting along a somewhat transverse direction, i.e. along the axis of the wheel, the respective bracket is canted or twisted within the support so that the spring action may not come into effect. A further disadvantage of all known devices is that the forces acting on the upper surface of the wheel or roller are to be transferred onto the support via a corresponding shaft and bearings. Since the central shaft or bearing would typically have a substantially smaller diameter than the wheel or roller, the corresponding forces are transferred via only small areas so that the respective areas of the bearings are subjected to substantial localised pressures and may be worn out quickly.

Corresponding damping or buffering means are frequently used for transport devices such as trucks, which have to be guided towards loading platforms and which, for a convenient and safe unloading or discharging of heavy goods, need to approach very closely to corresponding platforms. In such situations, some contact between the truck and the rolling platform is nearly unavoidable, wherein, due to the heavy mass of a truck even under very small relative velocities, there may occur substantial damages with the vehicle construction or upper body of the truck.

Accordingly, corresponding damping devices are attached onto a truck in a manner such as to extend beyond the profile of the vehicle body at least within a plane, in which the distance between the two approaching objects (truck and loading platform) will be the closest. This ensures that, upon a truck approaching a loading platform, the damping device is the first part of the truck to contact the loading platform thereby absorbing impacts and avoiding any damages on the vehicle body.

Of course, corresponding damping devices might as well be attached to the loading platform rather than on the truck or the damping devices might even be fixed on each of said relatively movable objects. It will be appreciated that trucks and loading platforms have just been presented as an example of possible objects, which may be provided with corresponding damping devices or buffers. Also with ships, in particular smaller boats, corresponding damping means might be provided outboards as well as with numerous other, relatively movable objects. Of course, the size and dimensions of the corresponding damping devices will be selected in view of the loads to be expected, i.e. small and relatively light objects would be provided with correspondingly small and light damping devices while the damping devices would have to be made the larger and more capable to absorb larger forces or loads, the heavier and bulkier the respective relatively movable objects might be. In any case, the field of transport by means of trucks is probably one of the main fields for the application of corresponding devices.

In view of the above cited prior art, the object underlying the present invention is the provision of a device for damping impacts and having the above-mentioned features, which is more effectively damping impacts between relatively movable objects and with only little wear.

This object is achieved in that the support comprises a partly cylindrical receiving surface, which is adapted to the cylindrical outer face of the damping element and which is facing away from the mounting side of the support such as to partly encompassing the cylindrical mantle face of the damping element in close proximity such that any impacts, which are acting on the surface of the damping element which is projecting from the support are directly transferred onto the receiving surface via the damping element.

Accordingly, in contrast to the prior art, the transfer of the impact forces does generally not occur via the bearing of a corresponding cylindrical damping element, but instead via the damping element and its respective surface itself directly onto a receiving surface, which is configured to accommodate the cylindrical surface of the damping element.

In order to achieve this in a manner as effectively as possible, it is recommended to have the receiving surface adapted to the cylindrical surface of the damping element such that the respective radii of the outer surface of the damping element and the cylindrical receiving surface of the support are distinguished by at most 2 mm and preferably by 1 mm. This results in the fact that in case of forces acting on the outer surface of the cylindrical damping element, the damping element may be shifted transverse of its axis by only a small amount before engaging the receiving surface of the support, wherein the forces are effectively transferred from the damping element onto the support via a relatively large contact area and from the support to the respective object, to which the support is mounted. The receiving surface is thus defined by a cavity having a partly cylindrical wall accommodating the damping element.

According to a preferred embodiment, the damping element still comprises a central bearing provided on the end faces of the damping element and extending along the axis thereof. However, such a central radial bearing of the damping element according to the present invention preferably comprises a sufficient radial play, which is larger than the distance between the outer surface of the damping element and the receiving surface of the support, partly encompassing said outer surface, such that, as already mentioned, the forces are not transferred via a shaft and the bearing of such a shaft or any other central element, but only via the walls and the inner portion or core of the cylindrical damping element itself.

In the preferred embodiment, the partly cylindrical receiving surface of the support covers the cylindrical damping element along an angular sector of at least 120 °, preferably at least 180 ° and in particular about 240 °, wherein a corresponding circular sector of more than 270° should preferably be avoided. In case this sector of encompassing the cylindrical damping element is too large, only a correspondingly small portion of the cylindrical mantle face of the damping element projects from support and in such a case, there might be a risk, in particular in case the approaching movement between the two objects does not occur along a direction perpendicular to the mounting surface of the damping element, that the support engages the upper surface of the respective opposite object before or simultaneously as the upper surface of the damping element engages said other object.

Regarding the central suspension an embodiment of the invention is preferred according to which the support, in addition to the mantle face of the cylindrical damping element partly also covers the end faces of the damping element at least up to a central area including the central axis thereof, wherein axial stubs or axial sleeves are provided on said support members and said damping element, respectively, for engaging complementary axial elements of the cylindrical damping element and support members on the end faces thereof.

In the preferred embodiment, the support according to the invention in total forms a housing, which is closed on five sides and open towards one side opposite of a mounting side and having a partly cylindrical cavity adapted to the cylindrical mantle face of the damping element, wherein the cylindrical mantle face of the damping element projects through said open side from the housing thus formed by said support.

According to a preferred embodiment of the invention, the support may be comprised of a hollow aluminium profile comprising separate plates for closing the end faces thereof. This hollow aluminium profile may have a substantially rectangular cross-sectional shape, comprising one cavity open towards one side and having a partly circular cross-section, in that said circle forming this cross-section of this cavity intersects one side of the rectangular shape, wherein the corner portions arranged away form the open side may additionally have recesses and cavities, respectively, serving to reduce the mass of material and the cross-section area of the bulk material of this profile.

The end plates of a corresponding support are adapted to the cross-section of such a hollow profile and they may for instance be screwed onto the end faces of the hollow profiles, thereby covering the end face of the cylindrical cavity, and comprising bearing elements, which are aligned along the axis of the cavity having a circular cross-section.

In the preferred embodiment, the damping element according to the invention comprises a wheel or roller having a hard core and a cylindrical sleeve encircling and covering the core and being made of an elastomeric material. The core may for instance be comprised of a substantially cylindrical hollow profile of aluminium, while the sleeve or cover preferably comprises a mantle consisting of an elastomeric material and having a thickness of several millimetres, wherein also the end faces of the core are covered with a corresponding layer of an elastomeric material, while just a central receiving socket may be provided on the end faces of said elastomeric mantle, which may for instance serve as a bearing sleeve or socket for receiving a corresponding axial stub extending inwardly from the endplates of said support.

The outer diameter of a corresponding cylindrical damping element may depend on the application and may span the range of from for instance 20 mm to 120 mm, and preferably this range (for the use with trucks) falls within the range from 40 mm to 90 mm. The axial length of a corresponding damping element may be between 50 mm and 100 mm, preferably from between 90 mm and 150 mm. The diameter of the rigid core may typically extend over a range from between 20% and 80 % of the total diameter and according to a preferred embodiment should fall in the range from between 50% and 70 % of the total diameter, such as about 60 % of the total diameter, wherein the latter is defined by means of the outer cylindrical shape of the elastomeric sleeve. The corresponding outer elastomeric sleeve should have a thickness, which is preferably at least 3 mm and more preferably more than 5 mm thick and may in particular fall within the range of thickness from 8 mm to 20 mm.

Further advantages, features and applications of the present invention may become apparent on basis of the following description of a preferred embodiment and the corresponding drawings. In the drawings show:
- Figure 1: a perspective view of a damping device according to the present invention.
- Figure 2: a front end view of the damping device according to figure 1.
- Figure 3: a lateral view of the damping device according to figure 1.
- Figure 4: a top view onto the damping device according to figure 1.
- Figure 5: a longitudinal section including the axis of the damping device according to figure 1, taken along the line B-B in figure 4.
- Figure 6: a cross-sectional view with a section perpendicular to the axis of the damping device along line A-A in figure 4.
- Figure 7: an enlarged cross-sectional view of the core of the damping elements to be seen in figure 3.
- Figure 8: a lateral view of the damping element.
- Figure 9: an axial view of the shell of the damping element.
- Figure 10: an end view of the damping element.
- Figure 11: a cross-sectional view taken perpendicular to the axis of the damping element.
- Figure 12: an enlarged lateral view of the core of the damping element.

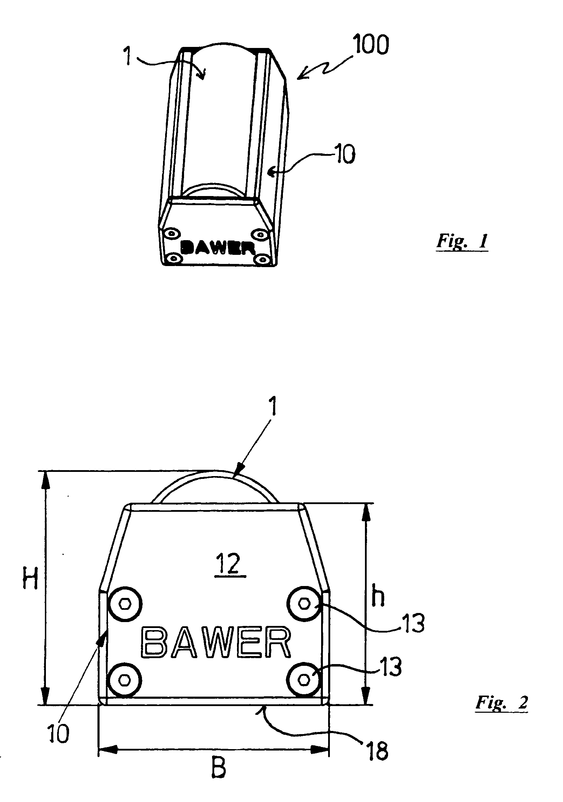

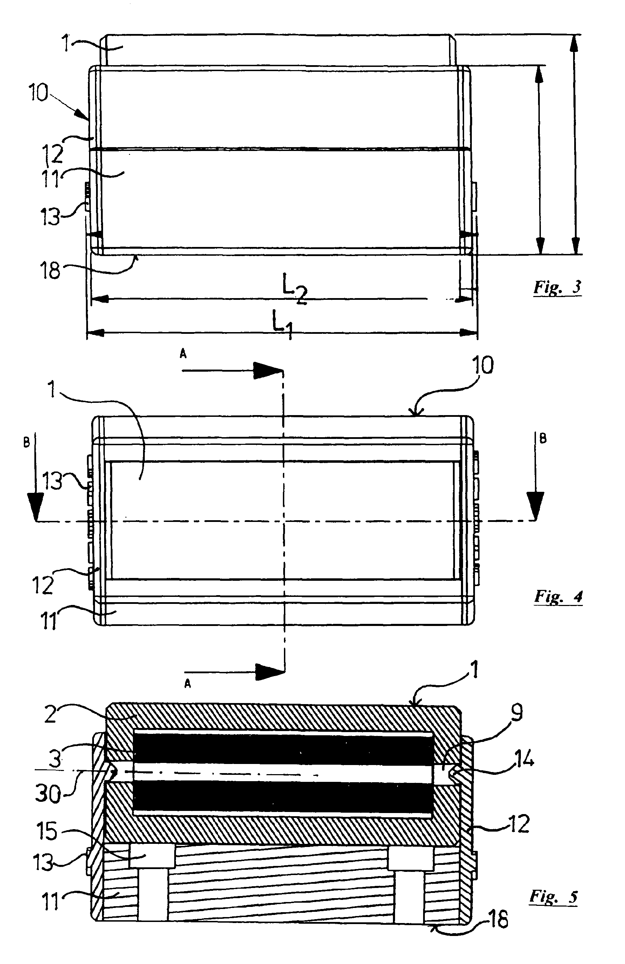

In figure 1, there is shown at 100 a damping device, which is substantially comprised of a support or a housing 10, respectively, and a cylindrical damping element 1, which is rotatably received within said housing. The end face view according to figure 2 shows that the support 10 substantially comprises a rectangular cross-section from the upper open side of which a part of the cylindrical mantle face of the damping element 1 projects. The vertical side faces of the support 10 are slightly slanted inwardly defining the shape of a trapezoid. The end face plate 12, as to be seen in the front end view of figure 2, is fixed to the profile element 11, which is better visible in figures 3 to 5, by means of screws 13. The screw bolts 13 have a flat cylindrical head comprising an inner hexagonal drive.

Referring to figure 3, there is shown a lateral view of the damping device of figures 1 and 2, respectively, which substantially corresponds to a side view on figure 2 from the right. Again, there is shown the cylindrical damping element 1 projecting beyond the upper side of the support and the housing formed by an aluminium profile 11. The total height H of the damping device 100 including the support 10 and the damping element 1 falls in the range from between 40 mm to 160 mm and preferably in the range from between 80 mm and 120 mm, in particular between 90 mm and 100 mm for the application with trucks. Figure 4 shows a top view towards the open side of the support 10 so that the damping element 1 is clearly visible as projecting from the upper aperture of the support 10. Further, there may be seen the front end plates 12 and the screws 13 by means of which the front end plates 12 are fixed to the aluminium profile 11.

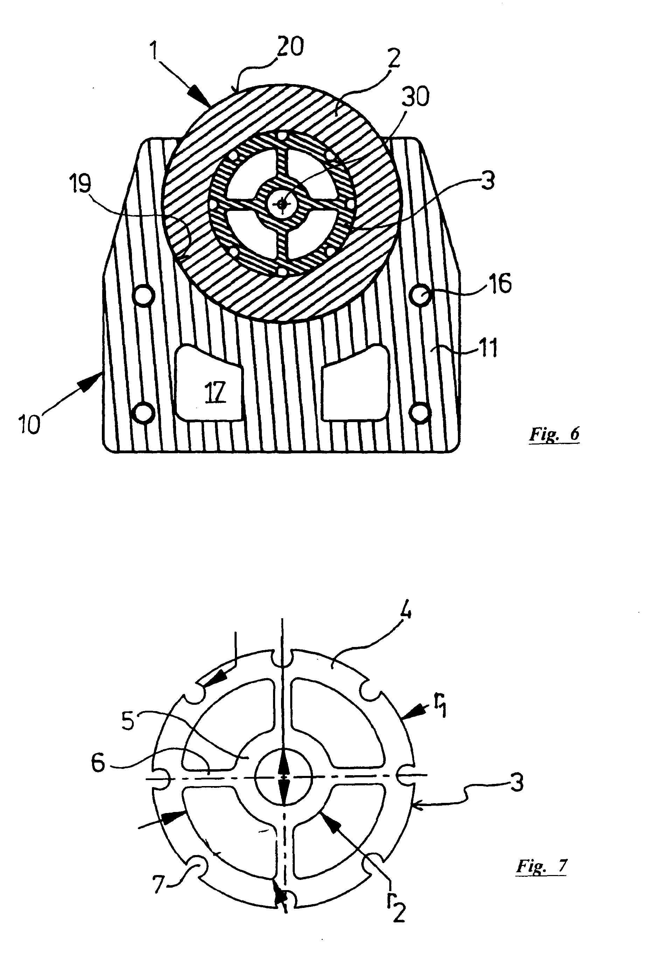

Figure 5 shows the same arrangement in a section taken along the axis. In this axial section, there may be seen among others that the profile 11, preferably made of aluminium, comprises two receiving holes 15 at the base of the cylindrical receiving surface 19 (see figure 6) for receiving bolts for fixing the support 10 on an object, such as for instance a truck structure. Further, there may be seen that the cylindrical damping element 1 is comprised of a core 3 and a mantle 2 completely surrounding the core, wherein the core 3 is made from a hard material, such as for instance aluminium, while the mantle 2 is comprised of an elastomeric material. In a preferred embodiment, the damping element has a diameter D of about 60 mm while the core 3 has a diameter of about 37 mm, which means that the wall thickness of the mantle 2 made from elastomeric material ranges from about 10 to 12 mm, and in particular is about 11,5 mm. Also at the end faces, the aluminium core 3 is covered by a correspondingly thick layer of said elastomeric material, preferably having the same thickness as the cylindrical mantle layer. The end faces of the elastomeric mantle layer comprises central bores 9 aligned along the axis 30. Axial stubs 14 extend from the inner face of the end face plate 12 into the bores 9, thereby forming an axial and radial bearing for rotatably supporting the damping element 1 in an unloaded condition. The cylindrical receiving surface 19 encompasses a substantial portion of the outer face 20 of the cylindrical mantle 2 of the damping element at a narrow distance, which distance is hardly visible in the figures but which is basically sufficient to support the damping elements in the support 10 in a freely rotatable condition, wherein the axle stubs 14 engaging the bore holes 9 keep the damping element 1 aligned along the axis 30 of the part cylindrical receiving surface 19, such that said faces 10, 20 are not or only slightly touching each other in an unloaded condition.

In figure 6, there is shown the damping device 100 along a section perpendicular to the axis 30. From this section, there may be recognized that the part cylindrical receiving surface 19 encompasses the cylindrical mantle face 20 of the damping element 1 about an angular sector of nearly 240 ° at a narrow distance but is still freely rotatable. Further, there may be recognized that the profile 11 of the support 10 defines a hollow profile with nearly rectangular outer dimensions, which hollow profile among others comprises the part cylindrical cavity defining the receiving surface 19 and in addition comprises inner hollow chambers 17 below said part cylindrical cavity and close to the lower edges of the profile, thereby saving some material. Further, there may be seen four threaded bores 16, which are engaged by screws 13 connecting the end plates 12 to the aluminium profile 11. Of course, it will be understood that the threaded bores 16 may not necessarily be through holes extending along the length of the aluminium profile 11, but may be restricted to some depth from the end faces of the aluminium profile 11 as required by the length of the fixing screws.

In figure 7, the aluminium core 3 of the damping element 1 is shown as a separate member. The respective aluminium core 3 is comprised of two concentrical hollow cylinders 4, 5, which are interconnected by means of four crosswise arranged bridges 6. Moreover, the outer surface of the outer hollow cylinder 4 comprises some channels 7 running parallel to the axis and having a part-cylindrical cross-section, which channels serve to improve the rigid and safe connection between the mantle 2 made from an elastomeric material and the outer surface of the cylindrical core 3.

In a preferred embodiment, the radius r₁ of the outer hollow cylinder falls within the range from between 17 and 20 mm (corresponding to a diameter from between 34 and 40 mm), while the radius r₂ of the inner hollow cylinder 5 is from between 6 and 7 mm (corresponding to about 12 to 14 mm in diameter).

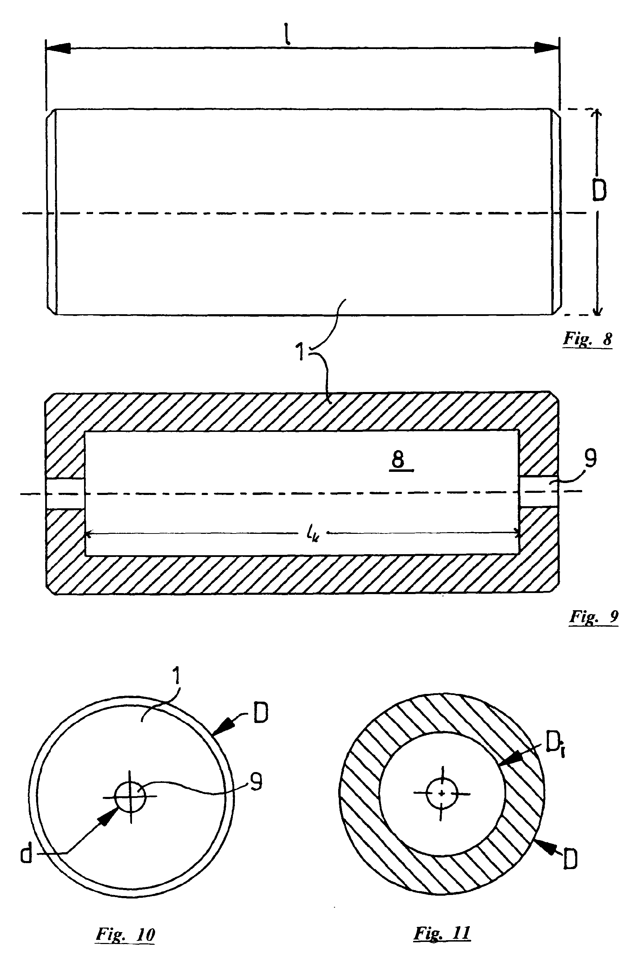

Figures 8 to 11 are showing and the outer shell or mantle 2 of the damping element 1 separately. The diameter D of the shell 2 is about 60 mm and the outer length I is about 150 mm. The inner length lₖ corresponds to the length of the aluminium core 3 and falls within the range from about 125 to 130 mm. The inner diameter Dᵢ corresponds to the outer diameter of the aluminium core and thus falls within the range from between 34 to 40 mm, which means that the shell 2 made from a damping, elastomeric material has a wall thickness from between 10 and 12,5 mm. The end faces of the shell 2 made from elastomeric material comprise two central receiving bores 9, serving as receiving bearing sockets for two axle stubs 14, which preferably are formed in one piece with the end face aluminium plates 12.

This type of radial support comprises a sufficient radial play for a radial movement of the damping element towards a receiving wall 19, since the engagement of the stubs 14 with the sockets 9 formed by a recess within the elastomeric material allows a sufficient deformation of the material surrounding the stubs 14.

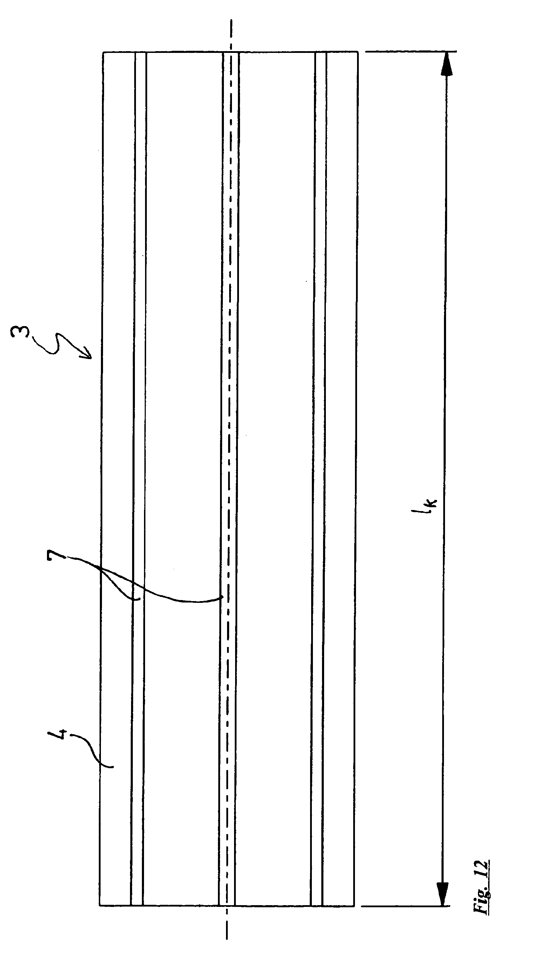

In figure 12, the aluminium core, which is shown in figure 7 in a cross-sectional view, is again shown in a side view, wherein there may in particular be recognized that the outer hollow cylinder 4 comprises several lengthwise extending channels 7 having a partly cylindrical cross-section, which channels serve to obtain a tight connection between the mantle 2 and the cylindrical core 3 in that the edges of the channels are pressed into the inner wall of the mantle 2 while some portion of the elastomeric material may extend into the respective channel 7.

As may clearly be recognized in particular on basis of figures 5 and 6, any impacts exerted onto the outer surface 19 of the damping element 1 which extends beyond the upper face of the support 10, are effectively transferred via the outer mantle 2 and indirectly also via the inner aluminium core 3 onto a large part of the receiving surface 19 since the receiving surface 19 encompasses the mantle face 20 with a relatively narrow radial play.

Accordingly, the damping element 1, while remaining freely rotatable when not subjected to any loads, may roll on any outer surface even in a loaded condition, wherein in particular the treatment and selection of the material of surface 19 and the mantle surface 20, which should comprise a relative friction as small as possible, may assist to provide for a rolling movement, if the damping element 1 engages the surface of an approaching object like a loading platform in a partly transverse movement.

A favourable combination of materials is for instance aluminium for the support 10 including the end plates 12 and nylon for the mantle 2 of the damping element 1, wherein most upper surfaces 19, 20 should preferably have a smooth surfaces finish. If necessary, a lubricant reducing the friction may be supplied to the gap between said two faces 19, 20.

Of course, also other materials may be used and the housing may for instance be made of a plastic material, for instance a hard duroplastic material or a thermoplastic composite material, just as the core 3 of the damping element 1. Moreover, also other metals than aluminium may be used for the support and the core.

For the mantle or shell 2, it is recommended to use the thermoplastic materials such as for instance polyurethane, polyethylene, polyamide and nylon, respectively.

While the radius of the part cylindrical receiving surface 19 is slightly larger than the radius of the outer surface 20 of the cylindrical damping element, it is generally preferred that the difference of these radii is less than 5mm, more preferably less than 2 mm and even more preferred less than 1 mm. Still, rotation of the damping element with respect to the support with no or only little friction between these surfaces should preferably be allowed.

For the purpose of original disclosure it is to be noted that any features which may be gathered by a skilled person from the present description, the drawings and the claims, even if only described in connection with particular further features, may be combined individually as well as in arbitrary combinations with any other of the features or groups of features disclosed herein, unless this is explicitly excluded or technical conditions would render such combinations impossible or senseless. The comprehensive, explicit discussion of any combinations of features which might be thought of is dispensed with just for the sake of brevity and legibility of the description and claims.

## Claims

1. Device for damping impacts between two relatively movable, in particular bulky objects, having
a support (10), which may be fixed on one of said objects with a mounting side (18) facing said object, and
a damping element (1) being substantially cylindrical and supported within the support (10) and comprising an elastomeric material,
**characterized in that** the support (10) comprises a part cylindrical receiving surface (19) adapted to the outer surface of the damping element (1), wherein said receiving surface is facing away from the mounting surface (18) and partly encompasses the cylindrical mantle face (20) of the damping element (1) at a narrow distance, such that at least a portion of the outer surface (20) projects from said support (10), wherein any impacts acting on the projecting portion of the damping element (1) are transferred across the damping element (1) onto the partly cylindrical receiving surface.

2. Device according to claim 1, **characterized in that** the damping element 1 is supported in said support (10) by means of a central bearing (9, 14) such as to have a radial play which is larger than the distance between the upper surface (20) of the damping element and the receiving surface (19) of said support in the unloaded condition thereof.

3. Device according to any of claims 1 or 2, **characterized in that** the partly cylindrical receiving surface encompasses said cylindrical damping elements about an angular section of at least 120 °, preferably at least 180 ° and in particular about 240 °, but still preferably not more than 270 °.

4. Device according to any of claims 1 to 3, **characterized in that** the support (10) partly encompasses the end faces of the cylindrical damping element (1) and at least in the area of the central axis (30) thereof, wherein the support comprises axle stubs (14) and/or axial sockets for engagement with complementary sockets (9) or axle stubs of the damping element 1.

5. Device according to any of claims 1 to 4, **characterized in that** the support comprises a substantially rectangular housing, which is closed on five sides thereof but open with respect to the remaining side and having a partly cylindrical cavity, which cavity defines a part cylindrical inner face 19 having an open side.

6. Device according to any of claims 1 to 5, **characterized in that** the support (10) comprises a hollow aluminium profile, the end faces of which are covered or closed by means of end plates (12).

7. Device according to any of claim 1 to 6, **characterized in that** the damping element comprises a hard core (3) and a cylindrical shell (2) made from an elastomeric material and covering the core.

8. Device according to claim 7, **characterized in that** the damping element comprises a substantially cylindrical aluminium core (3) and an elastomeric shell (2) having the shape of a hollow cylinder having central apertures (9) at the end faces and covering the core completely except for said axial apertures (9).

9. Device according to any of claims 1 to 8, **characterized in that** the damping element comprises an outer diameter from between 20 mm to 120 mm, preferably from between 40 mm to 90 mm.

10. Device according to any of claims 1 to 9, **characterized in that** the damping element comprises an axial length from between 50 mm and 200 mm, and preferably from between 90 mm to 150 mm.

11. Device according to claim 7 or any of claims 8 to 10 as referring to claim 7, **characterized in that** the core has a diameter corresponding from between 20 % and 80 % of the outer diameter of the damping element (1) and the elastomeric shell (2), respectively.

12. Device according to claim 11, **characterized in that** the diameter of the core comprises from between 50 % to 70 % of the outer diameter of the damping element.

13. Device according to any of claims 1 to 12, **characterized in that** the radial distance between the upper surface (20) of the damping element and the receiving surface (19) of the support is less than 2 mm and preferably less than 1 mm in the unloaded condition thereof.

14. Device according to any of claims 1 to 12, **characterized in that** the receiving surface (19) of the support (10) and the mantle surface (20) of the damping element (1) are configured such that under a load acting on the projecting portion of mantle surface a sliding movement between the receiving surface (19) and the mantle surface (20) and thus a rolling movement of the damping element (1) within the support can still be obtained.
